# EUROPEAN PATENT SPECIFICATION

(11) **EP 4 461 180 B1**
(45) Date of publication and mention of the grant of the patent: **10.06.2026**
(21) Application number: 24174687.4
(22) Date of filing: 08.05.2024
(51) Int. Cl.: A47L 9/24, A01M 3/00, A47L 7/00, A01M 1/22

(54) **VACUUM SUCTION DEVICE WITH ELECTRIC SHOCK MODULE**
STAUBSAUGVORRICHTUNG MIT ELEKTROSCHOCKMODUL
DISPOSITIF D'ASPIRATION SOUS VIDE AVEC MODULE DE CHOC ÉLECTRIQUE

(30) Priority: 08.05.2023 CN 202310510861
(43) Date of publication of application: 13.11.2024
(73) Proprietor: Ho, Yi Chang, Zhubei City, Hsinchu County (TW)
(72) Inventor: Ho, Yi Chang, Zhubei City, Hsinchu County (TW)
(74) Representative: Sun, Yiming

(56) References cited:
- KR-A- 20120 055 853
- KR-B1- 101 019 040

## Description

### BACKGROUND OF THE INVENTION

### Field of the Invention

The present invention relates to a vacuum suction device, particularly relates to a vacuum suction device equipped with an electric shock module at the same time.

### Description of Related Art

Insects (such as cockroaches and ants) can be seen everywhere in people's lives. Most people generally have psychological fears when they face cockroaches. There are various ways to eliminate cockroaches on the market. The ways can be roughly divided into methods of using drugs, physically capturing methods, or mixed methods of using drugs and physically capturing. For example, there are various types of cockroach traps, and the various types include a bait type, an adhesive type, and a capture type, etc. A method of using the bait-typed cockroach trap is to place the cockroach trap randomly with baits disposed inside the cockroach trap. The baits are usually added with insecticide ingredients. The ingredients have a delayed effect. When the baits added with the insecticide ingredients are brought back to cockroach's nest colony, the baits will be spread to other insects in order to therefore eliminate a large number of pest menaces.

Further considering the above various ways to eliminate cockroaches, in addition to problems of drug residues and accidental ingestion by children or pets, the method of using drugs has disadvantages that long-term and large-scale use of drugs will not only cause insects to become drug-resistant, but also will cause a negative contamination on people's environment. The physical capturing method can be designated to be combined with use of a strong adhesive so that cockroaches cannot escape. However, a surface containing the strong adhesive may also cause problem when the surface is accessible to children and pets. The physical capturing method can be also designated to be combined with use of a capture box that only allows entry of cockroaches and rejects their exit so that the cockroaches are unable to escape. However, how to deal with captured active cockroaches can also make people feel uncomfortable. The above-mentioned cockroach traps need to be recycled and discarded after a certain period of time. However, users are prone to forget their placement locations. Therefore, there are problems and deficiencies that need to be overcome and solved for the current cockroach elimination methods.

Vacuum cleaners have become one of standard cleaning equipment in people's modern home lives because they are very convenient to use and operate, and can be used to quickly suck out dust or foreign matters to clean rooms. However, such conventional cleaners cannot be used to deal with moving active insects (such as cockroaches, ants, etc.) that can be seen everywhere in people's lives. Since the insects are mobile, they will stay in a dust collective box of such cleaners and be in a stampede therein even for being sucked in by the vacuum cleaners. Therefore, generally speaking, such vacuum cleaners are not used to suck out moving active insects, and such vacuum cleaners are also not considered to be used to eliminate insects. Most people generally have psychological fears when they face cockroaches and ants wondering around, and they are under a great mental pressure caused by their encountering of the insects.

KR101019040B1 discloses an electric shock applying device for a vacuum cleaner. A vacuum cleaner and an insect capturing device therewith are provided to apply high-voltage electricity to a captured insect and to hygienically process the killed insect.

KR20120055853A discloses a device for gathering and removing harmful insects for a vacuum cleaner, which simplifies the structure of the device by directly connecting the device to a nozzle of a vacuum cleaner.

In view of the above, how to improve the above problems is a primary issue to be solved by the present invention.

### BRIEF SUMMARY OF THE INVENTION

A vacuum suction device equipped with an electric shock module in accordance with the present invention is provided. The invention is set out in the appended set of claims.

### BRIEF DESCRIPTION OF THE DRAWINGS

FIG. 1 shows a schematic cross-sectional view of a vacuum suction device with an electric shock module in accordance with a preferred embodiment of the present invention.
FIG. 2 shows a schematic perspective view of the electric shock module being metal pieces in accordance with a preferred embodiment of the present invention.
FIG. 3 shows a schematic cross-sectional view of an electric shock module being metal pieces in accordance with another preferred embodiment of the present invention.
FIG. 4 shows a schematic cross-sectional view of the vacuum suction device showing a suction tube set thereof with a smaller area in accordance with a preferred embodiment of the present invention.
FIG. 5 shows a schematic cross-sectional view of the vacuum suction device showing the suction tube set thereof having a capture suction disk in accordance with a preferred embodiment of the present invention.
FIG. 6 shows a schematic cross-sectional view of an electric shock module having an electrode position adjusting control unit in accordance with a preferred embodiment of the present invention.
FIG. 7 shows a schematic cross-sectional view of an electrode of an electric shock module being a flexible metal piece in accordance with a preferred embodiment of the present invention.
FIG. 8 shows a schematic cross-sectional view of an electrode of an electric shock module being a flexible metal piece in accordance with another preferred embodiment of the present invention.
FIG. 9 shows a schematic cross-sectional view of a vacuum suction device showing an electric shock module thereof is disposed in a collective unit of the vacuum suction device in accordance with another preferred embodiment of the present invention.
FIG. 10 shows a schematic cross-sectional view of a vacuum suction device including a control switch and a battery module in accordance with another preferred embodiment of the present invention.
FIG. 11 shows a schematic cross-sectional view of a vacuum suction device including a control switch and a battery module in accordance with further another preferred embodiment of the present invention.

### DETAILED DESCRIPTION OF THE INVENTION

Regrading technical solutions of the present invention, several preferred embodiments are exemplified and illustrated in detail below in accompany with drawings so as to provide the public with an in-depth understanding and recognition of the present invention.

The present invention is further described in detail below in conjunction with the accompanying drawings so that those with ordinary knowledge in a technical field to which the present invention belongs can implement the present invention with reference to descriptions of the specification of the present invention. If there are descriptions involving "first", "second", etc., for preferred embodiments of the present invention, the descriptions of "first", "second", etc., are used for descriptive purposes only and cannot be understood as indicating or implying their relative significance, or as implicit indication of a quantity of indicated technical features. Therefore, features defined and depicted as "first" and "second" may be considered explicitly or implicitly that at least one of the features is included.

In descriptions of the present invention, it should further be explained that, unless there are more explicit definitions and limitations, the terms of "disposing" and "connection" should be understood in a much broader sense. For example, "connection" can be a disposing connection, and can also be a dismantlable connection or an integral connection. Besides, "connection" can be a mechanical connection or can also be an electrical connection. Meanwhile, "connection" can be a direct connection or an indirect connection through an intermediate medium, or can be an internal connection between two components. For those with ordinary knowledge in a technical field to which the present invention belongs, specific meanings of the above terms in a disclosure of the present invention can be understood based on actual situations.

In addition, if "and/or" appears in descriptions of the present invention, its meaning includes three juxtaposed solutions. Taking "A and/or B" as an example, its meaning includes a solution of A being solely included, a solution of B being solely included, or a solution of A and B being simultaneously satisfied. In addition, technical solutions in various preferred embodiments of the present invention can be combined with each other, but the combination must be based on a fact that a person with ordinary knowledge in the technical field to which the invention belongs can realize the combination. When the combination of the above technical solutions is contradictory to each of the above technical solutions or cannot be realized, the combination of the above technical solutions should be considered as if the combination does not exist, and should also be not within a protection scope intended for the present invention.

In following descriptions, technical solutions of the present invention are described in detail with reference to the accompanying drawings. Devices described below or operating methods thereof are only used to illustrate the preferred embodiments of the present invention and are not used to define a scope of the present application. Furthermore, the same reference numbers depicted in the specification of the present invention refer to the same components, respectively.

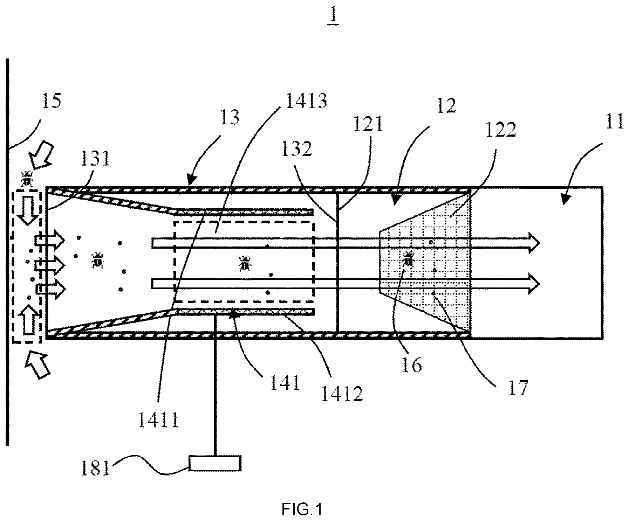

Please referring firstly to FIG. 1, FIG. 1 shows a schematic cross-sectional view of a vacuum suction device 1 with an electric shock module in accordance with a preferred embodiment of the present invention. The vacuum suction device 1 with the electric shock module includes a suction main body 11 in which a negative-pressure suction force is generated by a motor or a fan. The vacuum suction device 1 further includes a collective unit 12 spatially connected with the suction main body 11 and including a collective inlet 121 and a filtering system 122. The filtering system 122 is used to filter and collect an electrically shocked object 16 and/or a sucked object 17 (hereinafter generically called as "sucked objects"). The vacuum suction device 1 further includes a suction tube set 13 having an air inlet 131 and an air outlet 132. The air outlet 132 is able to be connected to the collective inlet 121. The air inlet 131 can be used to proactively generate an approximate-vacuum negative pressure between the air inlet 131 and a suction surface 15 in order to suck in air and the sucked objects. The vacuum suction device 1 further includes an electric shock module 141 disposed in the suction tube set 13, and capable of electrical discharge under high electric voltages to generate electric arc sparks. The vacuum suction device 1 further includes an electric voltage boost module 181. The electric voltage boost module 181 is electrically connected with the electric shock module 141 in order to electrically power the electric shock module 141 for electrical discharge under high electric voltages. The above description of "to proactively generate an approximate-vacuum negative pressure" means that a user of the vacuum suction device 1 is required to move the air inlet 131 close to the suction surface 15 in order for generating approximate-vacuum negative pressure. The electrically shocked object 16 cannot be sucked in due to enough generated suction forces without the suction surface 15.

The suction main body 11 can be exemplified but not limited to motors or fans for all kinds of vacuum suction devices. The suction main body 11 is configured to generate negative pressure. The collective unit 12 can be exemplified but not limited to all kinds of dust collecting boxes, dust collecting bags, etc. The collective unit 12 is configured to filter collected sucked objects. The suction tube set 13 can be exemplified but not limited to all kinds of suction tubes, suction heads, suction nozzles, etc. The suction surface 15 can be exemplified but not limited to all kinds of table surfaces, floor surfaces, wall surfaces, ceilings, etc. An approximate-vacuum negative pressure is generated between the air inlet 131 of the suction tube set 13 and the suction surface 15. As shown as a broken-line frame at a left side of FIG. 1, the above description of "approximate-vacuum negative pressure" means the air inlet 131 and the suction surface 15 are not completely attached to each other, and a gap space is reserved to allow the electrically shocked object 16 to enter. Since an air flowing-in area of the gap space is smaller than an air flowing area in the suction tube set 13, a suction force in the gap space is therefore increased. As a result, a larger sized and heavier electrically shocked object 16 can be sucked therein. The sucked object 17 can be exemplified but not limited to all kinds of dusts, aerial suspended particulate matters, etc. The sucked object 17 is defined as dusts, etc., generally intended to be sucked into suction devices and to flow in the electric shock module 141 without causing electrical discharge under high electric voltages and generation of electric arc sparks when the suction devices are used. The electrically shocked object 16 can be exemplified but not limited to all kinds of insects including cockroaches, ants, mosquitos, etc. A size and a weight of the electrically shocked object 16 are both larger than the sucked object 17. Besides, the electrically shocked object 16 has tissue fluids which have weak electroconductivity in order to cause the electric shock module 141 for electrical discharge under high electric voltages and generation of electric arc sparks.

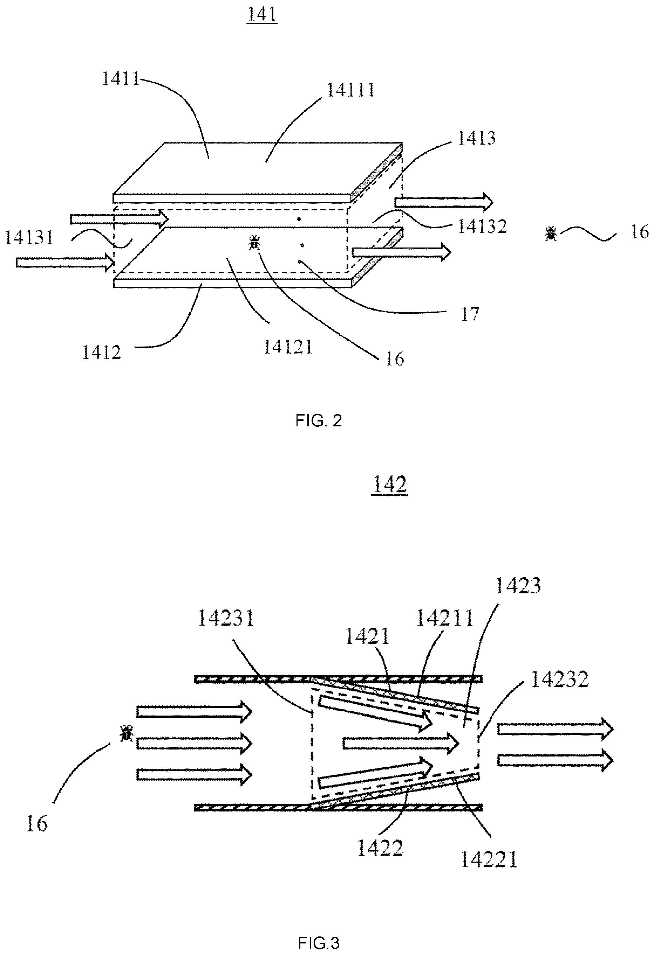

The electric shock module 141 is disposed inside the suction tube set 13. The electric shock module 141 includes a first electrode 1411 and a second electrode 1412 isolated and spaced from each other. An electric shock area 1413 is formed between the first electrode 1411 and the second electrode 1412. The sucked objects can enter from the air inlet 131, flow through the electric shock area 1413, and then are exhausted from the air outlet 132 to the collective inlet 121 of the collective unit 12. Please further refer to FIG. 2, the first electrode 1411 of the electric shock module 141 is constituted by a first metal piece 14111, and the second electrode 1412 is constituted by a second metal piece 14121. The electric shock area 1413 is formed between the first electrode 1411 and the second electrode 1412 which are isolated and spaced from each other to allow air flowing through the electric shock area 1413. A space of the electric shock area 1413 is defined and surrounded by the first metal piece 14111 and the second metal piece 14121. The electric shock area 1413 is a fluid flowing path, and fluid flowing walls surrounding the electric shock area 1413 are constituted by the first metal piece 14111 and the second metal piece 14121. The electrically shocked object 16 can be electrically shocked for many times during a process of the electrically shocked object 16 flowing through the electric shock area 1413. An electric shock area inlet 14131 is formed commonly by the first metal piece 14111 and the second metal piece 14121 at a side of the first metal piece 14111 and a side of the second metal piece 14121 near the air inlet 131. An electric shock area outlet 14132 is formed commonly by the first metal piece 14111 and the second metal piece 14121 at a side of the first metal piece 14111 and a side of the second metal piece 14121 near the air outlet 132. The sucked objects flow into the electric shock area 1413 from the electric shock area inlet 14131, and flow out of the electric shock area 1413 from the electric shock area outlet 14132. The electric voltage boost module 181 electrically powers the electric shock module 141 for electrical discharge under high electric voltages. The electrically shocked object 16 will be electrically shocked by the electric arc sparks generated by the electrical discharge under high electric voltages of the electric shock module 141, and then will flow into the collective unit 12 through the air outlet 132.

Understandably, positioning ways, locations and shapes of the first metal piece 14111 and the second metal piece 14121 are not limited to disclosure of FIG. 1. As long as the first electrode 1411 and the second electrode 1412 can be isolated and spaced from each other, the electric voltage boost module 181 can electrically power the electric shock module 141 for electrical discharge under high electric voltages and cause electrical discharge under high electric voltages between the first electrode 1411 and the second electrode 1412 to generate electric arc sparks when the electrically shocked object 16 flows through the electric shock area 1413, and the electrically shocked object 16 can flow out via the air outlet 132 after the electrically shocked object 16 is electrically shocked, any equivalents of the disclosed positioning ways, locations and shapes of the first metal piece 14111 and the second metal piece 14121 are in the protection scope of the present invention , which is determined by the appended claims.

Please referring to FIG. 3, FIG. 3 shows a schematic cross-sectional view of an electric shock module 142 in accordance with another preferred embodiment of the present invention. The electric shock module 142 includes a first electrode 1421 and a second electrode 1422 isolated and spaced from each other. An electric shock area 1423 is formed between the first electrode 1421 and the second electrode 1422. The first electrode 1421 of the electric shock module 142 is a first metal piece 14211, and the second electrode 1422 is a second metal piece 14221. An electric shock area inlet 14231 is formed commonly by the first metal piece 14211 and the second metal piece 14221 at a side of the first metal piece 14211 and a side of the second metal piece 14221 near the air inlet 131. An electric shock area outlet 14232 is formed by the first metal piece 14211 and the second metal piece 14221 at a side of the first metal piece 14211 and a side of the second metal piece 14221 near the air outlet 132. The electrically shocked object 16 flows into the electric shock area 1423 via the electric shock area inlet 14231, and flows out of the electric shock area 1423 via the electric shock area outlet 14232. Difference between an implement method of the electric shock module 142 of the another preferred embodiment and an implement method of the electric shock module 141 of the previous preferred embodiment is as follows. The electric shock area inlet 14231 is designated to be larger than the electric shock area outlet 14232. The sucked objects flow from the electric shock area inlet 14231 with a larger area to the electric shock area outlet 14232 with a smaller area. The electric shock area inlet 14231 with the larger area can facilitate easier entry of the electrically shocked object 16 into the electric shock area 1423. The electric shock area outlet 14232 with the smaller area facilitates generation of a gain effect of electric shocks. Hence, the electrically shocked object 16 can be ensured to be effectively electrically shocked before the electrically shocked object 16 leaves the electric shock area 1423. The electrically shocked object 16 after being electrically shocked can be expelled via the air outlet 132.

In the implement method as shown respectively in FIGS. 1-2, although the electric shock area 1413 of the previous preferred embodiment is formed between the first electrode 1411 and the second electrode 1412 which are approximately parallel to each other, an effect of having a larger sucking face can be achieved by forming different inner diameters inside the suction tube set 13. For instance, as shown in FIG. 1, an inner diameter of the suction tube set 13 can be gradually decreased or the suction tube set 13 is gradually inwardly shrunk from the air inlet 131 toward the electric shock area inlet 14131 to form a shape of the suction tube set 13 as a funnel. An exit of the funnel-like suction tube set 13 is spatially communicated with the electric shock area inlet 14131 in order to achieve an effect of easy entry of the electrically shocked object 16 through an entrance of the suction tube set 13 with a large area, and an effect of the electrically shocked object 16 being effectively electrically shocked in the electric shock area 1413. In the implement method as shown in FIG. 3, the funnel-shaped electric shock area 1423 is directly formed via being surrounded by the first electrode 1421 and the second electrode 1422 in order to achieve the effect of easy entry of the electrically shocked object 16 through an entrance of the suction tube set 13 with a large area, and the effect of the electrically shocked object 16 being effectively electrically shocked in the electric shock area 1423. It is understandable, based on the above, the disclosed implement methods in accordance with the present invention, either the implement method of the electric shock area inlet 14231 directly formed by the first electrode 1421 and the second electrode 1422 being larger than the electric shock area outlet 14232 or the implement method of the inner diameter of the suction tube set 13 being gradually enlarged to achieve a result of an area of the air inlet 131 being larger than an area of the electric shock area inlet 14131, are all in the protection scope of the present invention, which is determined by the appended claims, as long as the effect of easy entry of the electrically shocked object 16 through an entrance of the suction tube set 13, and the effect of the electrically shocked object 16 being effectively electrically shocked at an exit of the electric shock modules 141, 142 can be achieved.

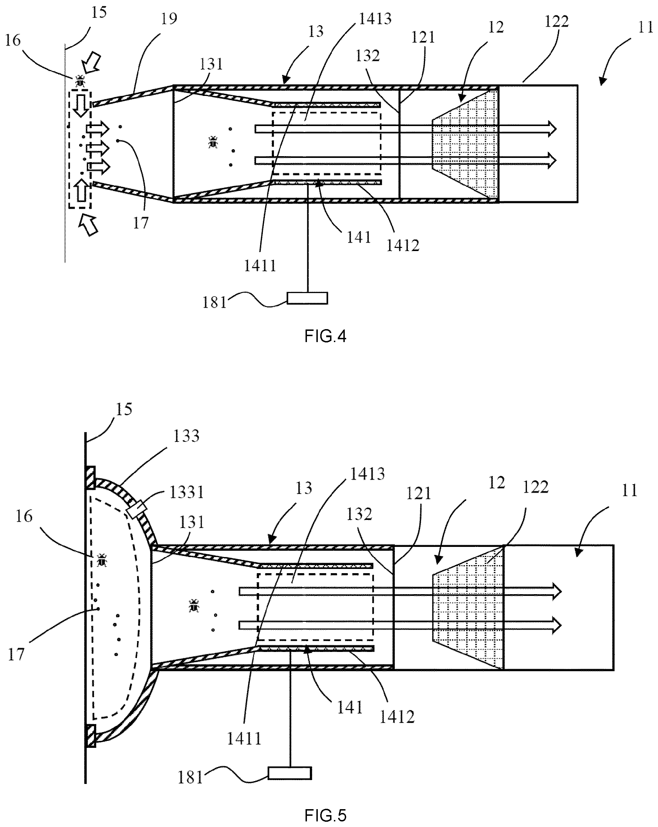

According to fluid mechanics for air, a suck force will be increased when an air entrance has a smaller area. One of main purposes of the implement methods of the preferred embodiments of the present invention is to effectively electrically shock the electrically shocked object 16. Hence, the above purpose of electric shock can be easily achieved by the electric shock area inlet 14231 being formed to be larger than the electric shock area outlet 14232, or the area of the air inlet 131 being formed to be larger than the area of the electric shock area inlet 14131. In order to increase an approximate-vacuum negative pressure suction force generated between the air inlet 131 and the suction surface 15, a power of the suction main body 11 can be enlarged, or a suction head 19 having a suction inlet with a smaller area can be added in front of the air inlet 131, as shown in FIG. 4. All variations of the preferred embodiments should be able to achieve the purpose of the electrically shocked object 16 to be sucked being effectively electrically shocked by conforming with result structures that the electric shock area inlet 14231 is larger than the electric shock area outlet 14232, or that the area of the air inlet 131 is larger than the area of the electric shock area inlet 14131. Understandably, the purpose of the present invention to achieve easy entry of the electrically shocked object 16 and effective electric shock of the electrically shocked object 16 will not be conflicted with the purpose of the present invention to increase the approximate-vacuum negative pressure suction force generated between the air inlet 131 and the suction surface 15. On the contrary, a design for achieving the purpose of easy entry and effective electric shock can be used to assist achievement of the purpose of increase of suction forces, or vice versa, when there is any requirement.

Please refer to FIG. 5, FIG. 5 shows a capture suction disk 133 is disposed in front of the air inlet 131 in accordance with another preferred embodiment of the present invention. Since insects have a strong ability to exercise and move, they are easily in a stampede everywhere. Hence, a suction disk with a large mouth diameter can be collocated with the suction surface 15 for snugly abutting between the suction disk and the suction surface 15. A disposing purpose of the capture suction disk 133 is to firstly cover insects for avoiding escape of the insects. A space inside the capture suction disk 133 is securely closed. The approximate-vacuum negative pressure suction force can still be generated between the air inlet 131 and the suction surface 15. The capture suction disk 133 is made by materials having a certain material resilience for easily snug abutting with the suction surface 15, such as rubber, plastic and silicone rubber, etc. The capture suction disk 133 further includes a capture suction disk air inlet valve 1331 capable of allowing air to enter the securely closed space inside the capture suction disk 133 in order to release a suction state of the capture suction disk 133.

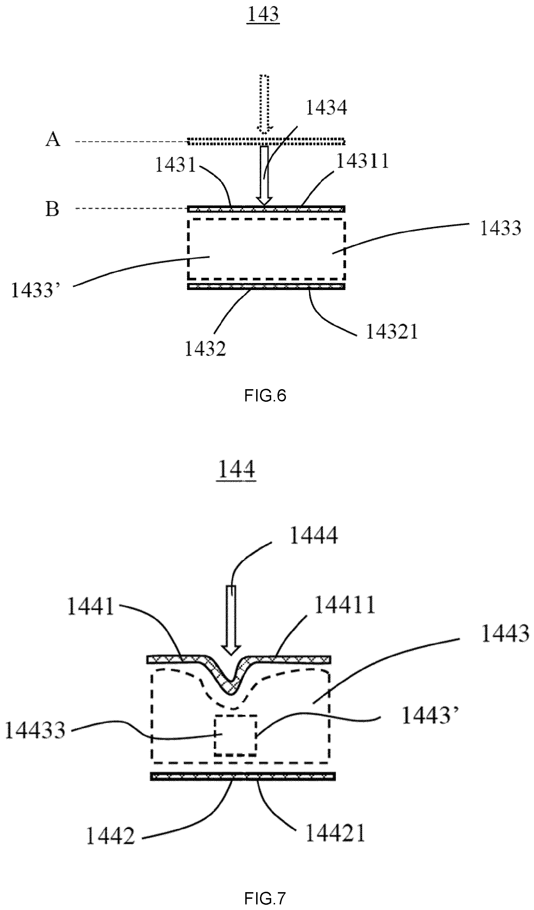

Please refer to FIG. 6, FIG. 6 shows an electric shock module 143 in accordance with another preferred embodiment of the present invention. The electric shock module 143 includes a first electrode 1431 and a second electrode 1432 isolated and spaced from each other. An electric shock area 1433 is formed between the first electrode 1431 and the second electrode 1432. The first electrode 1431 of the electric shock module 143 is constituted by a first metal piece 14311, and the second electrode 1422 is constituted by a second metal piece 14321. Difference between the electric shock module 143 of the another preferred embodiment and the electric shock module 141 of the previous preferred embodiment is as follows. The electric shock module 143 of the another preferred embodiment further includes an electrode position adjusting control unit 1434. The electrode position adjusting control unit 1434 can be used to adjust and control the first metal piece 14311 moving from a position A to a position B. When the first electrode 1431 is located in the position A, a spacing distance between the first electrode 1431 and the second electrode 1432 is larger than a distance between the first electrode 1431 and the second electrode 1432 capable of causing electrical discharge under high electric voltages and generation of electric arc sparks. When the first electrode 1431 moves to the position B, the electric shock area 1433 capable of causing electrical discharge under high electric voltages and generation of electric arc sparks is formed. Understandably, in another preferred embodiment of the present invention, when the first electrode 1431 is located in the position A, the spacing distance between the first electrode 1431 and the second electrode 1432 is capable of causing electrical discharge under high electric voltages and generation of electric arc sparks. When the first electrode 1431 moves to the position B, an electric shock area 1433' having a decreased volume is formed to achieve an effect of a gain of electric shocks. In the another preferred embodiment of the present invention, the first metal piece 14311 and the second metal piece 14321 displace relatively to each other in an approximately parallel manner. In other words, a size change of the electric shock area inlet (not labeled in FIG. 6) and a size change of the electric shock area outlet (not labeled in FIG. 6) is the same. Understandably, in another preferred embodiment of the present invention, the first metal piece 14311 and the second metal piece 14321 are arranged to enable the size change of the electric shock area inlet being different from the size change of the electric shock area outlet. As long as the electrically shocked object 16 can be achieved to be effectively electrically shocked, and the electrically shocked object 16 can be expelled via the air outlet 132 after the electrically shocked object 16 is electrically shocked, any arrangement of the first metal piece 14311 and the second metal piece 14321 is in the protection scope of the present invention, which is determined by the appended claims.

Please refer to FIG. 7, FIG. 7 shows an electric shock module 144 in accordance with another preferred embodiment of the present invention. The electric shock module 144 includes a first electrode 1441 and a second electrode 1442 isolated and spaced from each other. An electric shock area 1443 is formed between the first electrode 1441 and the second electrode 1442. Difference between the electric shock module 144 of the another preferred embodiment and the electric shock modules 141, 143 of the previous preferred embodiments is as follows. The first electrode 1441 of the electric shock module 144 is constituted by a flexible metal piece 14411. The second electrode 1442 is constituted by a second metal piece 14421. An electrode position adjusting control unit 1444 can be used to adjust and control a flexible extent of the flexible metal piece 14411 toward the second metal piece 14421. An electric shock gain zone 14433 is generated at a location where the first electrode 1441 and the second electrode 1442 are closer to each other. The electric shock gain zone 14433 can be used to enhance a successful effect of electric shocks. Understandably, a location of the flexible metal piece 14411 to be adjusted and controlled by the electrode position adjusting control unit 1444 is not limited to a middle of the flexible metal piece 14411. Understandably, in another preferred embodiment of the present invention, when the first electrode 1441 is in an original position thereof, a spacing distance between the first electrode 1441 and the second electrode 1442 is larger than a distance between the first electrode 1441 and the second electrode 1442 capable of causing electrical discharge under high electric voltages and generation of electric arc sparks. In other words, when the first electrode 1441 is in the original position thereof, the electric shock area 1443 does not exist. When the first electrode 1441 is moved to a flexible position thereof, a spacing distance between the first electrode 1441 and the second electrode 1442 reaches the distance between the first electrode 1441 and the second electrode 1442 to form an electric shock area 1443' capable of causing electrical discharge under high electric voltages and generation of electric arc sparks.

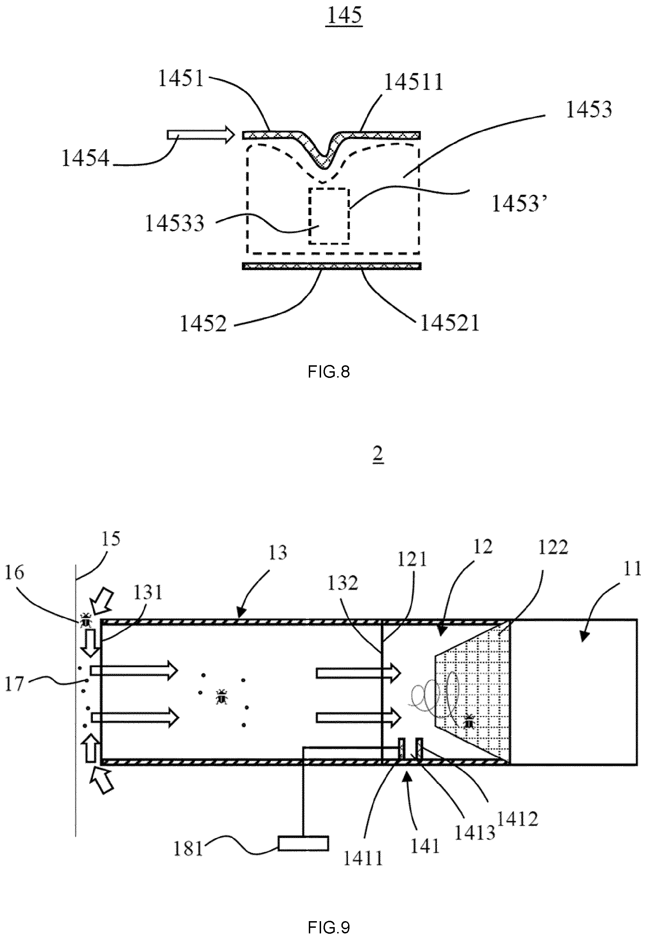

Please refer to FIG. 8, FIG. 8 shows an electric shock module 145 in accordance with another preferred embodiment of the present invention. The electric shock module 145 includes a first electrode 1451 and a second electrode 1452 isolated and spaced from each other. An electric shock area 1453 is formed between the first electrode 1451 and the second electrode 1452. The first electrode 1451 of the electric shock module 145 is constituted by a flexible metal piece 14511. The second electrode 1452 can be constituted by a second metal piece 14521. Difference between the electric shock module 145 of the another preferred embodiment and the electric shock module 144 of the previous preferred embodiment is as follows. An electrode position adjusting control unit 1454 is disposed in an axial position of the first electrode 1451 close to the air inlet 131. The electrode position adjusting control unit 1454 adjusts and controls a flexible moving extent of the flexible metal piece 14511 in a push-to-bend manner. An electric shock gain zone 14533 is generated at a location where the first electrode 1451 and the second electrode 1452 are closer to each other in order to enhance a successful effect of electric shocks. Understandably, in another preferred embodiment of the present invention, when the first electrode 1451 is in an original position thereof, a spacing distance between the first electrode 1451 and the second electrode 1452 is larger than a distance between the first electrode 1451 and the second electrode 1452 capable of causing electrical discharge under high electric voltages and generation of electric arc sparks. In other words, when the first electrode 1451 is in the original position thereof, the electric shock area 1453 does not exist. When the first electrode 1451 is moved to a flexible position thereof, a spacing distance between the first electrode 1451 and the second electrode 1452 reaches the distance between the first electrode 1451 and the second electrode 1452 to form an electric shock area 1453' capable of causing electrical discharge under high electric voltages and generation of electric arc sparks.

Please refer to FIG. 9, FIG. 9 shows a vacuum suction device 2 with an electric shock module in accordance with another preferred embodiment of the present invention. Difference between the vacuum suction device 2 with an electric shock module of the another preferred embodiment and the vacuum suction device 1 with an electric shock module of the previous preferred embodiment is as follows. An electric shock module 141 is disposed inside the collective unit 12. When air enters the collective unit 12 via the collective inlet 121, an air vortex is generated. The electrically shocked object 16 continuously rotates and collides on an inner wall of the collective unit 12. When the electrically shocked object 16 flows through the electric shock area 1413, electrical discharge under high electric voltages and generation of electric arc sparks are caused between the first electrode 1411 and the second electrode 1412. As shown in FIG. 9, one of the electric shock module 141 is exemplified to be disposed inside the collective unit 12. Understandably, a disposing number of the electric shock module 141 and locations thereof do not limit the protection scope of the present invention, which is determined by the appended claims.

The vacuum suction devices 1, 2 with an electric shock module in accordance with the present invention respectively include an electric voltage boost module 181. The electric voltage boost module 181 is electrically connected with the electric shock modules 141, 142, 143, 144, 145, and is capable of boosting electric voltages respectively between the first electrodes 1411, 1421, 1431, 1441, 1451 and the second electrodes 1412, 1422, 1432, 1442, 1452 up to more than 1,000 volts (a voltage to electrically shock through air is approximately 5kV/cm). A boost electric energy for the electric shock modules 141, 142, 143, 144, 145 is also stored in a capacitor. When the electrically shocked object 16 enters the electric shock areas 1413, 1423, 1433, 1433', 1443, 1443', 1453, 1453', electron ionization is generated to lower an electric resistance in the air. Electric currents flow toward a shortest path to trigger electrical discharge of the capacitor storing the high-voltage electric energy and generation of electric arc sparks for stunning or killing insects by electrical shocks.

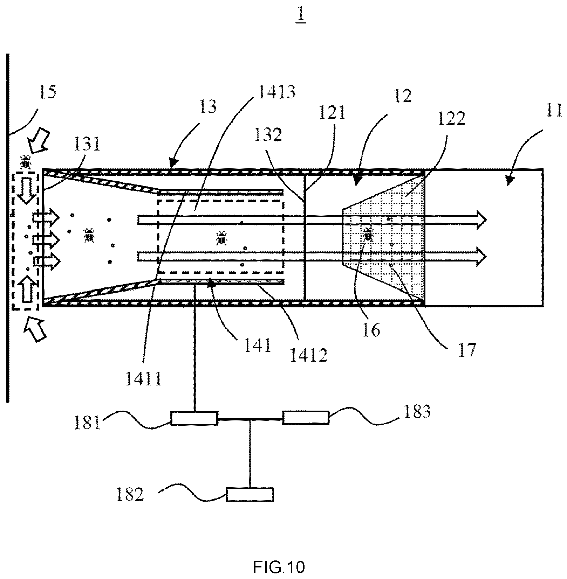

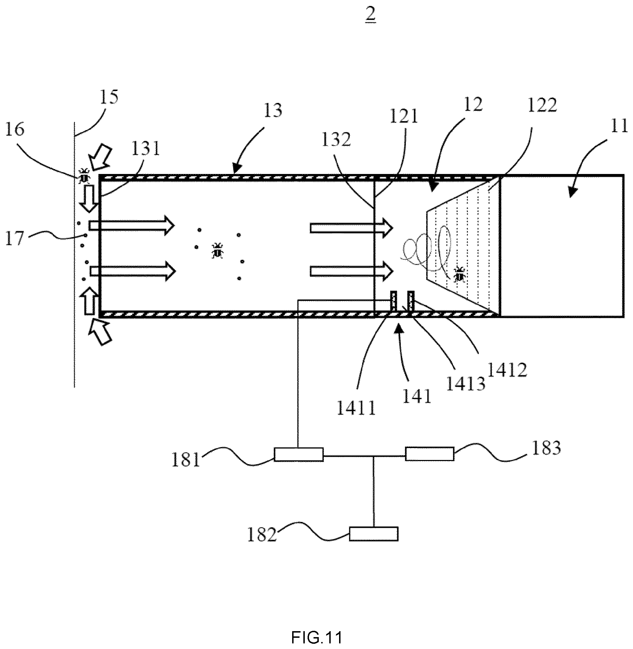

Referring respectively to FIG. 10 and FIG. 11, in another two preferred embodiments of the present invention, the vacuum suction devices 1, 2 with an electric shock module can further respectively include a control switch 182 and a battery module 183. The battery module 183 is rapidly dismantlably electrically connected with the electric voltage boost module 181 to supply power to the electric voltage boost module 181. The control switch 182 is electrically connected with the electric voltage boost module 181 to control power supplies of the electric shock modules 141, 142, 143, 144, 145, respectively. Understandably, if the power supplies of the electric shock modules 141, 142, 143, 144, 145 are shut down, an original vacuum suction function of the vacuum suction devices 1, 2 will not be affected, and the suction main body 11 can still be used normally. The electric voltage boost module 181, the control switch 182 and the battery module 183 described in the another preferred embodiment of the present invention are located outside the suction tube set 13. However, it can be understood that installation positions of the electric voltage boost module 181, the control switch 182 and the battery module 183 do not affect a scope intended to be protected in the present invention.

The above detailed descriptions are provided as an explicit illustrations description of feasible preferred embodiments of the present invention. Therefore, they are not used to limit a claimed scope of the present invention. Any equivalent implementation or modification should be included within the protection scope of the present patent, which is determined by the appended claims. Besides, the present patent is not only indeed innovative regarding technical ideas, but also has many effects that cannot be achieved by conventional traditional structures.

## Claims

1. A vacuum suction device (1, 2) equipped with an electric shock module (141, 142, 143, 144, 145), comprising:
a suction main body (11) in which a negative-pressure suction force is generated by a motor or a fan;
a collective unit (12) spatially connected with the suction main body (11) and comprising a collective inlet (121) and a filtering system (122), the filtering system (122) used to filter and collect an electrically shocked object (16) and/or a sucked object (17);
a suction tube set (13) comprising an air inlet (131) and an air outlet (132), the air outlet (132) being connected with the collective inlet (121), negative pressure being formed inside the suction tube set (13), and the air inlet (131) used to proactively generate an approximate-vacuum negative pressure between the air inlet (131) and a suction surface (15) in order to suck in air, the electrically shocked object (16) and/or the sucked object (17);
**characterized in that,**
the electric shock module (141, 142, 143, 144, 145) is disposed in the suction tube set (13), and used to electrically discharge the shocked object (16) under high electric voltages for generating electric arc sparks; and
an electric voltage boost module (181) electrically connected with the electric shock module (141, 142, 143, 144, 145) to electrically power the electric shock module (141, 142, 143, 144, 145) for electrical discharge under the high electric voltages,
wherein the electric shock module (141, 142, 143, 144, 145) comprises a first electrode (1411, 1421, 1431, 1441, 1451) and a second electrode (1412, 1422, 1432, 1442, 1452) isolated and spaced from each other, an electric shock area (1413, 1423, 1433, 1433', 1443, 1443', 1453, 1453') is formed between the first electrode (1411, 1421, 1431, 1441, 1451) and the second electrode (1412, 1422, 1432, 1442, 1452), the electrically shocked object (16) flows through the electric shock area (1413, 1423, 1433, 1433', 1443, 1443', 1453, 1453').

2. The vacuum suction device (1, 2) equipped with an electric shock module (141, 142, 143, 144, 145) as claimed in claim 1, wherein when the electrically shocked object (16) flows into the electric shock area (1413, 1423, 1433, 1433', 1443, 1443', 1453, 1453'), the electrical discharge under the high electric voltages and generation of the electric arc sparks are caused between the first electrode (1411, 1421, 1431, 1441, 1451) and the second electrode (1412, 1422, 1432, 1442, 1452).

3. The vacuum suction device (1, 2) equipped with an electric shock module (141, 142, 143, 144, 145) as claimed in claim 2, wherein the first electrode (1411,1421, 1431, 1441, 1451) is a first metal piece (14111, 14211, 14311, 14411, 14511), and the second electrode (1412, 1422, 1432, 1442, 1452) is a second metal piece (14121, 14221, 14321, 14421, 14521), a space of the electric shock area (1413, 1423, 1433, 1433', 1443, 1443', 1453, 1453') is defined and surrounded by the first metal piece (14111, 14211, 14311, 14411, 14511) and the second metal piece (14121, 14221, 14321, 14421, 14521), an electric shock area inlet (14131, 14231) is formed commonly by the first metal piece (14111, 14211, 14311, 14411, 14511) and the second metal piece (14121, 14221, 14321, 14421, 14521) at a side of the first metal piece (14111, 14211, 14311, 14411, 14511) and a side of the second metal piece (14121, 14221, 14321, 14421, 14521) near the air inlet (131), an electric shock area outlet (14132, 14232) is formed commonly by the first metal piece (14111, 14211, 14311, 14411, 14511) and the second metal piece (14121, 14221, 14321, 14421, 14521) at a side of the first metal piece (14111, 14211, 14311, 14411, 14511) and a side of the second metal piece (14121, 14221, 14321, 14421, 14521) near the air outlet (132), the electrically shocked object (16) enters the electric shock area inlet (14131, 14231) to get into the space of the electric shock area (1413, 1423, 1433, 1433', 1443, 1443', 1453, 1453') and to be electrically shocked for many times, and flows out of the electric shock area (1413, 1433, 1433') from the electric shock area outlet (14132, 14232) to be expelled from the air outlet (132).

4. The vacuum suction device (1, 2) equipped with an electric shock module (141, 142, 143, 144, 145) as claimed in claim 3, further comprising a suction head (19) connected in front of the air inlet (131), and a cross-sectional area of the suction head (19) being gradually shrunk from the air inlet (131) toward an outer suction inlet of the suction head (19) .

5. The vacuum suction device (1, 2) equipped with an electric shock module (141, 142, 143, 144, 145) as claimed in claim 3, wherein the electric shock area inlet (14131, 14231) is larger than the electric shock area outlet (14132, 14232).

6. The vacuum suction device (1, 2) equipped with an electric shock module (141, 142, 143, 144, 145) as claimed in claim 3, further comprising an electrode position adjusting control unit to make the first electrode (1411, 1421, 1431, 1441, 1451) and the second electrode (1412, 1422, 1432, 1442, 1452) moving relatively to each other in order to change a size of the electric shock area (1413, 1423, 1433, 1433', 1443, 1443', 1453, 1453').

7. The vacuum suction device (1, 2) equipped with an electric shock module (141, 142, 143, 144, 145) as claimed in claim 6, wherein the first electrode (1411, 1421, 1431, 1441, 1451) is a flexible metal piece (14411, 14511), the flexible metal piece (14411, 14511) is flexibly bent and deformed so that the first electrode (1411, 1421, 1431, 1441, 1451) is moved close to the second electrode (1412, 1422, 1432, 1442, 1452) without being in contact with the second electrode (1412, 1422, 1432, 1442, 1452).

8. The vacuum suction device (1, 2) equipped with an electric shock module (141, 142, 143, 144, 145) as claimed in claim 7, wherein an electric shock gain zone (14433, 14533) is generated where the flexible metal piece (14411, 14511) is flexibly bent and deformed.

9. The vacuum suction device (1, 2) equipped with an electric shock module (141, 142, 143, 144, 145) as claimed in claim 1, further comprising a control switch (182), wherein the control switch (182) is electrically connected with the electric voltage boost module (181) to control power supplies of the electric shock module (141, 142, 143, 144, 145).

10. The vacuum suction device (1, 2) equipped with an electric shock module (141, 142, 143, 144, 145) as claimed in claim 9, further comprising a battery module, wherein the battery module is rapidly dismantlably electrically connected with the electric voltage boost module (181) to supply power to the electric voltage boost module (181).

11. The vacuum suction device (1, 2) equipped with an electric shock module (141, 142, 143, 144, 145) as claimed in claim 1, further comprising a battery module (183), wherein the battery module (183) is rapidly dismantlably electrically connected with the electric voltage boost module (181) to supply power to the electric voltage boost module (181).

12. The vacuum suction device (1, 2) equipped with an electric shock module (141, 142, 143, 144, 145) as claimed in claim 1, wherein at least one of the electric shock module (141, 142, 143, 144, 145) disposed in the collective unit (12).

13. The vacuum suction device (1, 2) equipped with an electric shock module (141, 142, 143, 144, 145) as claimed in claim 12, wherein the electric shock module (141, 142, 143, 144, 145) comprises a first electrode (1411, 1421, 1431, 1441, 1451) and a second electrode (1412, 1422, 1432, 1442, 1452) isolated and spaced from each other, an electric shock area (1413, 1423, 1433, 1433', 1443, 1443', 1453, 1453') is formed between the first electrode (1411, 1421, 1431, 1441, 1451) and the second electrode (1412, 1422, 1432, 1442, 1452), the electrically shocked object (16) flows through the electric shock area (1413, 1423, 1433, 1433', 1443, 1443', 1453, 1453') to cause the electrical discharge under the high electric voltages and generation of the electric arc sparks between the first electrode (1411, 1421, 1431, 1441, 1451) and the second electrode (1412, 1422, 1432, 1442, 1452).

## Patentansprüche

1. Eine mit einem Elektroschockmodul (141, 142, 143, 144, 145) ausgestattete Vakuum-Saugvorrichtung (1, 2), umfassend:
einen Saughauptkörper (11), in dem eine Unterdruck-Saugkraft durch einen Motor oder einen Ventilator erzeugt wird;
eine Sammeleinheit (12), die räumlich mit dem Saughauptkörper (11) verbunden ist und einen Sammeleinlass (121) und ein Filtersystem (122) umfasst, wobei das Filtersystem (122) dazu verwendet wird, ein einem Elektroschock unterzogenes Objekt (16) und/oder ein angesaugtes Objekt (17) zu filtern und zu sammeln;
einen Saugrohrsatz (13), der einen Lufteinlass (131) und einen Luftauslass (132) umfasst, wobei der Luftauslass (132) mit dem Sammeleinlass (121) verbunden ist, in dem Saugrohrsatz (13) Unterdruck gebildet wird, und der Lufteinlass (131) dazu verwendet wird, aktiv einen annähernden Vakuumunterdruck zwischen dem Lufteinlass (131) und einer Saugfläche (15) zu erzeugen, um Luft, das einem Elektroschock unterzogene Objekt (16) und/oder das angesaugte Objekt (17) anzusaugen;
**dadurch gekennzeichnet, dass**
das Elektroschockmodul (141, 142, 143, 144, 145) in dem Saugrohrsatz (13) angeordnet ist und dazu verwendet wird, das einem Elektroschock unterzogene Objekt (16) unter hohen elektrischen Spannungen elektrisch zu entladen, um elektrische Lichtbogenfunken zu erzeugen; und
ein elektrisches Spannungserhöhungsmodul (181), das elektrisch mit dem Elektroschockmodul (141, 142, 143, 144, 145) verbunden ist, um das Elektroschockmodul (141, 142, 143, 144, 145) unter den hohen elektrischen Spannungen zur elektrischen Entladung elektrisch mit Energie zu versorgen,
wobei das Elektroschockmodul (141, 142, 143, 144, 145) eine erste Elektrode (1411, 1421, 1431, 1441, 1451) und eine zweite Elektrode (1412, 1422, 1432, 1442, 1452) umfasst, die voneinander isoliert und beabstandet sind, ein Elektroschockbereich (1413, 1423, 1433, 1433', 1443, 1443', 1453, 1453') zwischen der ersten Elektrode (1411, 1421, 1431, 1441, 1451) und der zweiten Elektrode (1412, 1422, 1432, 1442, 1452) gebildet ist, und das einem Elektroschock unterzogene Objekt (16) durch den Elektroschockbereich (1413, 1423, 1433, 1433', 1443, 1443', 1453, 1453') strömt.

2. Die mit einem Elektroschockmodul (141, 142, 143, 144, 145) ausgestattete Vakuum-Saugvorrichtung (1, 2) nach Anspruch 1, wobei, wenn das einem Elektroschock unterzogene Objekt (16) in den Elektroschockbereich (1413, 1423, 1433, 1433', 1443, 1443', 1453, 1453') strömt, die elektrische Entladung unter den hohen elektrischen Spannungen und die Erzeugung der elektrischen Lichtbogenfunken zwischen der ersten Elektrode (1411, 1421, 1431, 1441, 1451) und der zweiten Elektrode (1412, 1422, 1432, 1442, 1452) verursacht werden.

3. Die mit einem Elektroschockmodul (141, 142, 143, 144, 145) ausgestattete Vakuum-Saugvorrichtung (1, 2) nach Anspruch 2, wobei die erste Elektrode (1411, 1421, 1431, 1441, 1451) ein erstes Metallstück (14111, 14211, 14311, 14411, 14511) ist, und die zweite Elektrode (1412, 1422, 1432, 1442, 1452) ein zweites Metallstück (14121, 14221, 14321, 14421, 14521) ist, ein Raum des Elektroschockbereichs (1413, 1423, 1433, 1433', 1443, 1443', 1453, 1453') durch das erste Metallstück (14111, 14211, 14311, 14411, 14511) und das zweite Metallstück (14121, 14221, 14321, 14421, 14521) definiert und umgeben ist, ein Einlass des Elektroschockbereichs (14131, 14231) gemeinsam durch das erste Metallstück (14111, 14211, 14311, 14411, 14511) und das zweite Metallstück (14121, 14221, 14321, 14421, 14521) an einer Seite des ersten Metallstücks (14111, 14211, 14311, 14411, 14511) und einer Seite des zweiten Metallstücks (14121, 14221, 14321, 14421, 14521) nahe dem Lufteinlass (131) gebildet ist, ein Auslass des Elektroschockbereichs (14132, 14232) gemeinsam durch das erste Metallstück (14111, 14211, 14311, 14411, 14511) und das zweite Metallstück (14121, 14221, 14321, 14421, 14521) an einer Seite des ersten Metallstücks (14111, 14211, 14311, 14411, 14511) und einer Seite des zweiten Metallstücks (14121, 14221, 14321, 14421, 14521) nahe dem Luftauslass (132) gebildet ist, das einem Elektroschock unterzogene Objekt (16) in den Einlass des Elektroschockbereichs (14131, 14231) eintritt, um in den Raum des Elektroschockbereichs (1413, 1423, 1433, 1433', 1443, 1443', 1453, 1453') zu gelangen und viele Male einem Elektroschock unterzogen zu werden, und aus dem Elektroschockbereich (1413, 1433, 1433') durch den Auslass des Elektroschockbereichs (14132, 14232) ausströmt, um aus dem Luftauslass (132) ausgestoßen zu werden.

4. Die mit einem Elektroschockmodul (141, 142, 143, 144, 145) ausgestattete Vakuum-Saugvorrichtung (1, 2) nach Anspruch 3, ferner umfassend einen Saugkopf (19), der vor dem Lufteinlass (131) verbunden ist, und wobei eine Querschnittsfläche des Saugkopfs (19) von dem Lufteinlass (131) hin zu einem äußeren Saugeinlass des Saugkopfs (19) allmählich verkleinert ist.

5. Die mit einem Elektroschockmodul (141, 142, 143, 144, 145) ausgestattete Vakuum-Saugvorrichtung (1, 2) nach Anspruch 3, wobei der Einlass des Elektroschockbereichs (14131, 14231) größer als der Auslass des Elektroschockbereichs (14132, 14232) ist.

6. Die mit einem Elektroschockmodul (141, 142, 143, 144, 145) ausgestattete Vakuum-Saugvorrichtung (1, 2) nach Anspruch 3, ferner umfassend eine Steuereinheit zum Einstellen der Elektrodenposition, um die erste Elektrode (1411, 1421, 1431, 1441, 1451) und die zweite Elektrode (1412, 1422, 1432, 1442, 1452) relativ zueinander zu bewegen, um eine Größe des Elektroschockbereichs (1413, 1423, 1433, 1433', 1443, 1443', 1453, 1453') zu ändern.

7. Die mit einem Elektroschockmodul (141, 142, 143, 144, 145) ausgestattete Vakuum-Saugvorrichtung (1, 2) nach Anspruch 6, wobei die erste Elektrode (1411, 1421, 1431, 1441, 1451) ein flexibles Metallstück (14411, 14511) ist, das flexible Metallstück (14411, 14511) flexibel gebogen und verformt wird, sodass die erste Elektrode (1411, 1421, 1431, 1441, 1451) nahe an die zweite Elektrode (1412, 1422, 1432, 1442, 1452) bewegt wird, ohne mit der zweiten Elektrode (1412, 1422, 1432, 1442, 1452) in Kontakt zu sein.

8. Die mit einem Elektroschockmodul (141, 142, 143, 144, 145) ausgestattete Vakuum-Saugvorrichtung (1, 2) nach Anspruch 7, wobei eine Elektroschock-Verstärkungszone (14433, 14533) dort erzeugt wird, wo das flexible Metallstück (14411, 14511) flexibel gebogen und verformt wird.

9. Die mit einem Elektroschockmodul (141, 142, 143, 144, 145) ausgestattete Vakuum-Saugvorrichtung (1, 2) nach Anspruch 1, ferner umfassend einen Steuerschalter (182), wobei der Steuerschalter (182) elektrisch mit dem elektrischen Spannungserhöhungsmodul (181) verbunden ist, um Stromversorgungen des Elektroschockmoduls (141, 142, 143, 144, 145) zu steuern.

10. Die mit einem Elektroschockmodul (141, 142, 143, 144, 145) ausgestattete Vakuum-Saugvorrichtung (1, 2) nach Anspruch 9, ferner umfassend ein Batteriemodul, wobei das Batteriemodul schnell lösbar elektrisch mit dem elektrischen Spannungserhöhungsmodul (181) verbunden ist, um das elektrische Spannungserhöhungsmodul (181) mit Energie zu versorgen.

11. Die mit einem Elektroschockmodul (141, 142, 143, 144, 145) ausgestattete Vakuum-Saugvorrichtung (1, 2) nach Anspruch 1, ferner umfassend ein Batteriemodul (183), wobei das Batteriemodul (183) schnell lösbar elektrisch mit dem elektrischen Spannungserhöhungsmodul (181) verbunden ist, um das elektrische Spannungserhöhungsmodul (181) mit Energie zu versorgen.

12. Die mit einem Elektroschockmodul (141, 142, 143, 144, 145) ausgestattete Vakuum-Saugvorrichtung (1, 2) nach Anspruch 1, wobei wenigstens eines der Elektroschockmodule (141, 142, 143, 144, 145) in der Sammeleinheit (12) angeordnet ist.

13. Die mit einem Elektroschockmodul (141, 142, 143, 144, 145) ausgestattete Vakuum-Saugvorrichtung (1, 2) nach Anspruch 12, wobei das Elektroschockmodul (141, 142, 143, 144, 145) eine erste Elektrode (1411, 1421, 1431, 1441, 1451) und eine zweite Elektrode (1412, 1422, 1432, 1442, 1452) umfasst, die voneinander isoliert und beabstandet sind, ein Elektroschockbereich (1413, 1423, 1433, 1433', 1443, 1443', 1453, 1453') zwischen der ersten Elektrode (1411, 1421, 1431, 1441, 1451) und der zweiten Elektrode (1412, 1422, 1432, 1442, 1452) gebildet ist, und das einem Elektroschock unterzogene Objekt (16) durch den Elektroschockbereich (1413, 1423, 1433, 1433', 1443, 1443', 1453, 1453') strömt, um die elektrische Entladung unter den hohen elektrischen Spannungen und die Erzeugung der elektrischen Lichtbogenfunken zwischen der ersten Elektrode (1411, 1421, 1431, 1441, 1451) und der zweiten Elektrode (1412, 1422, 1432, 1442, 1452) zu verursachen.

## Revendications

1. Dispositif d'aspiration sous vide (1, 2) équipé d'un module d'électrochoc (141, 142, 143, 144, 145), comprenant :
un corps principal d'aspiration (11) dans lequel une force d'aspiration à pression négative est générée par un moteur ou un ventilateur ;
une unité collectrice (12) connectée spatialement au corps principal d'aspiration (11) et comprenant une entrée collectrice (121) et un système de filtration (122), le système de filtration (122) étant utilisé pour filtrer et collecter un objet (16) soumis à un choc électrique et/ou un objet aspiré (17) ;
un ensemble de tube d'aspiration (13) comprenant une entrée d'air (131) et une sortie d'air (132), la sortie d'air (132) étant connectée à l'entrée collectrice (121), une pression négative étant formée à l'intérieur de l'ensemble de tube d'aspiration (13), et l'entrée d'air (131) étant utilisée pour générer activement une pression négative de quasi-vide entre l'entrée d'air (131) et une surface d'aspiration (15) afin d'aspirer de l'air, l'objet (16) soumis à un choc électrique et/ou l'objet aspiré (17) ;
**caractérisé en ce que**
le module d'électrochoc (141, 142, 143, 144, 145) est disposé dans l'ensemble de tube d'aspiration (13), et utilisé pour décharger électriquement l'objet (16) soumis à un choc électrique sous de hautes tensions électriques afin de générer des étincelles d'arc électrique ; et
un module d'élévation de tension électrique (181) électriquement connecté au module d'électrochoc (141, 142, 143, 144, 145) pour alimenter électriquement le module d'électrochoc (141, 142, 143, 144, 145) en vue d'une décharge électrique sous les hautes tensions électriques,
dans lequel le module d'électrochoc (141, 142, 143, 144, 145) comprend une première électrode (1411, 1421, 1431, 1441, 1451) et une deuxième électrode (1412, 1422, 1432, 1442, 1452) isolées et espacées l'une de l'autre, une zone d'électrochoc (1413, 1423, 1433, 1433', 1443, 1443', 1453, 1453') est formée entre la première électrode (1411, 1421, 1431, 1441, 1451) et la deuxième électrode (1412, 1422, 1432, 1442, 1452), l'objet (16) soumis à un choc électrique s'écoulant à travers la zone d'électrochoc (1413, 1423, 1433, 1433', 1443, 1443', 1453, 1453').

2. Dispositif d'aspiration sous vide (1, 2) équipé d'un module d'électrochoc (141, 142, 143, 144, 145) selon la revendication 1, dans lequel lorsque l'objet (16) soumis à un choc électrique s'écoule dans la zone d'électrochoc (1413, 1423, 1433, 1433', 1443, 1443', 1453, 1453'), la décharge électrique sous les hautes tensions électriques et la génération des étincelles d'arc électrique sont provoquées entre la première électrode (1411, 1421, 1431, 1441, 1451) et la deuxième électrode (1412, 1422, 1432, 1442, 1452).

3. Dispositif d'aspiration sous vide (1, 2) équipé d'un module d'électrochoc (141, 142, 143, 144, 145) selon la revendication 2, dans lequel la première électrode (1411, 1421, 1431, 1441, 1451) est une première pièce métallique (14111, 14211, 14311, 14411, 14511), et la deuxième électrode (1412, 1422, 1432, 1442, 1452) est une deuxième pièce métallique (14121, 14221, 14321, 14421, 14521), un espace de la zone d'électrochoc (1413, 1423, 1433, 1433', 1443, 1443', 1453, 1453') étant défini et entouré par la première pièce métallique (14111, 14211, 14311, 14411, 14511) et la deuxième pièce métallique (14121, 14221, 14321, 14421, 14521), une entrée de zone d'électrochoc (14131, 14231) étant formée conjointement par la première pièce métallique (14111, 14211, 14311, 14411, 14511) et la deuxième pièce métallique (14121, 14221, 14321, 14421, 14521) au niveau d'un côté de la première pièce métallique (14111, 14211, 14311, 14411, 14511) et d'un côté de la deuxième pièce métallique (14121, 14221, 14321, 14421, 14521) proches de l'entrée d'air (131), une sortie de zone d'électrochoc (14132, 14232) étant formée conjointement par la première pièce métallique (14111, 14211, 14311, 14411, 14511) et la deuxième pièce métallique (14121, 14221, 14321, 14421, 14521) au niveau d'un côté de la première pièce métallique (14111, 14211, 14311, 14411, 14511) et d'un côté de la deuxième pièce métallique (14121, 14221, 14321, 14421, 14521) proches de la sortie d'air (132), l'objet (16) soumis à un choc électrique entrant dans l'entrée de zone d'électrochoc (14131, 14231) pour pénétrer dans l'espace de la zone d'électrochoc (1413, 1423, 1433, 1433', 1443, 1443', 1453, 1453') et être soumis à un choc électrique plusieurs fois, et s'écoulant hors de la zone d'électrochoc (1413, 1433, 1433') depuis la sortie de zone d'électrochoc (14132, 14232) pour être expulsé de la sortie d'air (132).

4. Dispositif d'aspiration sous vide (1, 2) équipé d'un module d'électrochoc (141, 142, 143, 144, 145) selon la revendication 3, comprenant en outre une tête d'aspiration (19) connectée devant l'entrée d'air (131), et une aire de section transversale de la tête d'aspiration (19) étant progressivement réduite depuis l'entrée d'air (131) vers une entrée d'aspiration externe de la tête d'aspiration (19).

5. Dispositif d'aspiration sous vide (1, 2) équipé d'un module d'électrochoc (141, 142, 143, 144, 145) selon la revendication 3, dans lequel l'entrée de zone d'électrochoc (14131, 14231) est plus grande que la sortie de zone d'électrochoc (14132, 14232).

6. Dispositif d'aspiration sous vide (1, 2) équipé d'un module d'électrochoc (141, 142, 143, 144, 145) selon la revendication 3, comprenant en outre une unité de commande de réglage de position des électrodes pour faire se déplacer la première électrode (1411, 1421, 1431, 1441, 1451) et la deuxième électrode (1412, 1422, 1432, 1442, 1452) l'une par rapport à l'autre afin de modifier une taille de la zone d'électrochoc (1413, 1423, 1433, 1433', 1443, 1443', 1453, 1453').

7. Dispositif d'aspiration sous vide (1, 2) équipé d'un module d'électrochoc (141, 142, 143, 144, 145) selon la revendication 6, dans lequel la première électrode (1411, 1421, 1431, 1441, 1451) est une pièce métallique flexible (14411, 14511), la pièce métallique flexible (14411, 14511) étant fléchie et déformée de manière flexible de sorte que la première électrode (1411, 1421, 1431, 1441, 1451) soit déplacée près de la deuxième électrode (1412, 1422, 1432, 1442, 1452) sans être en contact avec la deuxième électrode (1412, 1422, 1432, 1442, 1452).

8. Dispositif d'aspiration sous vide (1, 2) équipé d'un module d'électrochoc (141, 142, 143, 144, 145) selon la revendication 7, dans lequel une zone de gain d'électrochoc (14433, 14533) est générée à l'endroit où la pièce métallique flexible (14411, 14511) est fléchie et déformée de manière flexible.

9. Dispositif d'aspiration sous vide (1, 2) équipé d'un module d'électrochoc (141, 142, 143, 144, 145) selon la revendication 1, comprenant en outre un interrupteur de commande (182), dans lequel l'interrupteur de commande (182) est électriquement connecté au module d'élévation de tension électrique (181) pour commander des alimentations électriques du module d'électrochoc (141, 142, 143, 144, 145).

10. Dispositif d'aspiration sous vide (1, 2) équipé d'un module d'électrochoc (141, 142, 143, 144, 145) selon la revendication 9, comprenant en outre un module de batterie, dans lequel le module de batterie est électriquement connecté de manière rapidement démontable au module d'élévation de tension électrique (181) pour alimenter en énergie le module d'élévation de tension électrique (181).

11. Dispositif d'aspiration sous vide (1, 2) équipé d'un module d'électrochoc (141, 142, 143, 144, 145) selon la revendication 1, comprenant en outre un module de batterie (183), dans lequel le module de batterie (183) est électriquement connecté de manière rapidement démontable au module d'élévation de tension électrique (181) pour alimenter en énergie le module d'élévation de tension électrique (181).

12. Dispositif d'aspiration sous vide (1, 2) équipé d'un module d'électrochoc (141, 142, 143, 144, 145) selon la revendication 1, dans lequel au moins l'un des modules d'électrochoc (141, 142, 143, 144, 145) est disposé dans l'unité collectrice (12).

13. Dispositif d'aspiration sous vide (1, 2) équipé d'un module d'électrochoc (141, 142, 143, 144, 145) selon la revendication 12, dans lequel le module d'électrochoc (141, 142, 143, 144, 145) comprend une première électrode (1411, 1421, 1431, 1441, 1451) et une deuxième électrode (1412, 1422, 1432, 1442, 1452) isolées et espacées l'une de l'autre, une zone d'électrochoc (1413, 1423, 1433, 1433', 1443, 1443', 1453, 1453') étant formée entre la première électrode (1411, 1421, 1431, 1441, 1451) et la deuxième électrode (1412, 1422, 1432, 1442, 1452), et l'objet (16) soumis à un choc électrique s'écoulant à travers la zone d'électrochoc (1413, 1423, 1433, 1433', 1443, 1443', 1453, 1453') pour provoquer la décharge électrique sous les hautes tensions électriques et la génération des étincelles d'arc électrique entre la première électrode (1411, 1421, 1431, 1441, 1451) et la deuxième électrode (1412, 1422, 1432, 1442, 1452).
